# EUROPEAN PATENT APPLICATION

(11) **EP 3 722 637 A1**
(43) Date of publication of application: **14.10.2020**
(21) Application number: 19167806.9
(22) Date of filing: 08.04.2019
(51) Int. Cl.: F16H 3/091

(54) **A TRANSMISSION FOR A VEHICLE**

(71) Applicant: Ningbo Geely Automobile Research & Development Co. Ltd., Hangzhou Bay New District Ningbo 315336 (CN)
(72) Inventor: KÄLLNER, Ola, 431 38 MÖLNDAL (SE)
(74) Representative: Zacco Sweden AB

(57) **Abstract**

The invention relates to a transmission (1) for a vehicle. The transmission comprises a first shaft (2), a second shaft (3) and a third shaft (4), an idling transmission wheel (5) journaled on the first shaft (2) and an idling gear wheel (6) journaled on the first shaft (2), and a coupling mechanism (9). The idling transmission wheel (5) and the idling gear wheel (6) are selectively rotationally lockable to the first shaft (2) by means of the coupling mechanism (9). The transmission (1) further comprises a gear wheel (10) arranged on the second shaft (3) which gear wheel is engaged with the idling gear wheel (6) of the first shaft (2), a transmission wheel (11) arranged on the third shaft (4), and a drive chain or belt (12). The idling transmission wheel (5) and the transmission wheel (11) of the third shaft are connected to each other through the drive chain or belt (12), thereby providing a forward gear of the transmission when the idling transmission wheel (5) is rotationally locked to the first shaft (2), and the transmission further comprises a further transmission wheel (14) arranged on the second shaft (3) which transmission wheel is connected to the transmission wheel (11) of the third shaft (4) through the drive chain or belt (12), thereby providing a reverse gear of the transmission when the idling gear wheel (6) is rotationally locked to the first shaft (2).

## Description

### TECHNICAL FIELD

The invention relates to a transmission for a vehicle which transmission comprises a drive chain or belt for transferring torque.

### BACKGROUND

A transmission for a vehicle can be designed in many ways for achieving the requisite gears and functions. There are however boundary conditions with respect to costs, weight and available space at the same time as the performance of the transmission should be fulfilled. Thus, it is desirable to improve the efficiency and reduce the number of components of the transmission.

### SUMMARY

An objective of the invention is to provide a transmission for a vehicle which transmission enables improved efficiency and a reduced number of components.

The objective is achieved by a transmission for a vehicle, wherein the transmission comprises a first shaft, a second shaft and a third shaft, an idling transmission wheel journaled on the first shaft and an idling gear wheel journaled on the first shaft, and a coupling mechanism, wherein the idling transmission wheel and the idling gear wheel are selectively rotationally lockable to the first shaft by means of the coupling mechanism, and the transmission further comprises a gear wheel arranged on the second shaft which gear wheel is engaged with the idling gear wheel of the first shaft, a transmission wheel arranged on the third shaft, and a drive chain or belt, and wherein the idling transmission wheel and the transmission wheel of the third shaft are connected to each other through the drive chain or belt, thereby providing a forward gear of the transmission when the idling transmission wheel is rotationally locked to the first shaft, and the transmission further comprises a further transmission wheel arranged on the second shaft which transmission wheel is connected to the transmission wheel of the third shaft through the drive chain or belt, thereby providing a reverse gear of the transmission when the idling gear wheel is rotationally locked to the first shaft.

The invention is based on the insight that by such a transmission the efficiency of the transmission can be improved at the same time as a reverse gear can be provided by a non-complicated design. By the use of the drive chain or belt, the torque losses can be reduced as compared to a structure where torque is transferred by gear wheels engaged with each other.

For example, the first shaft can be an input shaft and the third shaft can be an output shaft of the transmission, such as a final drive shaft or differential shaft. By arrangement of the drive chain or belt extending from the idling transmission wheel of the first shaft to a transmission wheel of a differential shaft, a high speed forward gear with reduced losses can be achieved. In addition, a reverse gear can be achieved by instead transferring torque from the first shaft to the second shaft by the idling gear wheel of the first shaft and the gear wheel of the second shaft. The rotation direction of the second shaft will be opposite to the rotation direction of the first shaft, and the drive chain or belt can be driven by the further transmission wheel of the second shaft for achieving the reverse gear. Thus, a separate shaft for obtaining a reverse gear is not needed.

The term "drive chain or belt" used herein is meant to cover chains having chain links, particularly tooth chains, but also driving belts, particularly toothed belts.

The transmission can be a manual transmission, a semi-automatic or an automatic transmission, such as for example a dual clutch transmission (DCT). In such a DCT comprising an inner input shaft and an outer input shaft, wherein the inner input shaft and the outer input shaft are arranged concentrically relative to each other, the first shaft is preferably the outer input shaft.

According to one embodiment of the transmission, the further transmission wheel of the second shaft is an idling transmission wheel journaled on the second shaft which idling transmission wheel is selectively rotationally lockable to the second shaft for providing the reverse gear. Hereby, the further transmission wheel of the second shaft can rotate freely relative to the second shaft when using the forward gear, and be rotationally locked to the second shaft for transferring torque to the drive chain or belt when using the reverse gear.

According to a further embodiment, a further forward gear of the transmission is provided through the idling gear wheel of the first shaft and the gear wheel of the second shaft when the idling gear wheel is rotationally locked to the first shaft and the further transmission wheel of the second shaft is idling. By means of one or more gear wheels the torque can be transferred to the third shaft while using the same gear ratio between the first shaft and the second shaft as for the reverse gear. This further forward gear can preferably be the first forward gear of the transmission having the lowest gear ratio. By using the same gear ratio between the first shaft and the second shaft for the reverse gear and the first forward gear, suitable gear ratios can be achieved for both the reverse gear and the first forward gear.

According to a further embodiment, the coupling mechanism comprises a coupling sleeve displaceable in an axial direction, wherein the idling transmission wheel and the idling gear wheel are selectively rotationally lockable to the first shaft by means of displacement of the coupling sleeve, and preferably the coupling mechanism is a synchronizer comprising the coupling sleeve, wherein the synchronizer is arranged to enable shifting between the forward gear, the reverse gear and a neutral position where none of the idling transmission wheel and the idling gear wheel is rotationally locked to the first shaft. Hereby, the forward and the reverse gear can be selected in an effective and non-complicated way. In addition, in the neutral position any further gear of the transmission can be activated.

According to a further embodiment, the transmission provides a plurality of forward gears with different gear ratios between the input shaft and the output shaft, and the forward gear provided by the drive chain or belt has the lowest gear ratio of the forward gears of the transmission, providing the highest speed of the output shaft. Preferably, at least one of said plurality of forward gears between the input shaft and the output shaft is achieved by torque transfer between gear wheels engaged with each other. The use of the drive chain or belt for achieving the gear with the highest speed of the output shaft will often reduce the torque losses to a large extent. Further, this makes it possible to increase the ratio span of the transmission.

According to a further embodiment, the transmission provides a plurality of forward gears with different gear ratios between the input shaft and the output shaft, and the forward gear provided by the drive chain or belt has the gear ratio closest to 1:1 of the forward gears of the transmission. Preferably, at least one of said plurality of forward gears between the input shaft and the output shaft is achieved by torque transfer between gear wheels engaged with each other. Hereby, the torque losses can be reduced to a large extent by means of the drive chain or belt.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1A is a schematic view of one example embodiment of a transmission according to the invention,
Fig. 1B is a side view taken along the line 1B-1B in Fig. 1A,
Fig. 2 shows how power is transferred when reverse gear is activated,
Fig. 3 shows how power is transferred when the forward gear is activated,
Fig. 4 shows how power is transferred when the further forward gear is activated, and
Fig. 5 is a schematic view of a further example embodiment of the transmission.

### DETAILED DESCRIPTION OF EXAMPLE EMBODIMENTS

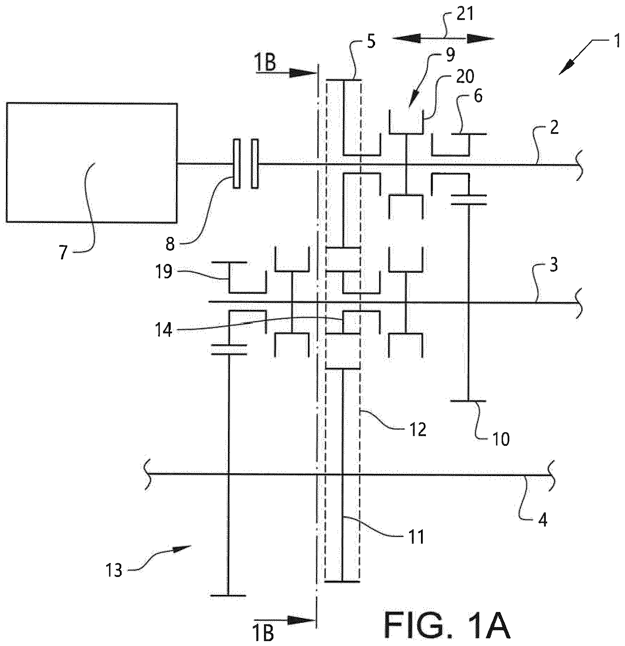

Fig. 1A is a schematic view showing a transmission 1 for a vehicle.

The transmission 1 comprises a first shaft 2, a second shaft 3 and a third shaft 4, an idling transmission wheel 5 journaled on the first shaft 2 and an idling gear wheel 6 journaled on the first shaft 2. The first shaft 2 is preferably an input shaft connectable to a drive unit 7, such as an electric motor or internal combustion engine, for example by a clutch 8.

The transmission further comprises a coupling mechanism 9. The idling transmission wheel 5 and the idling gear wheel 6 are selectively rotationally lockable to the first shaft 2 by means of the coupling mechanism 9. The transmission also has a gear wheel 10 arranged on the second shaft 3 which gear wheel 10 is engaged with the idling gear wheel 6 of the first shaft 2, a transmission wheel 11 arranged on the third shaft 4, and a drive chain or belt 12. The second shaft can be an intermediate shaft 3.

The idling transmission wheel 5 and the transmission wheel 11 of the third shaft 4 are connected to each other through the drive chain or belt 12. A forward gear of the transmission 1 is provided when the idling transmission wheel 5 is rotationally locked to the first shaft 2, since torque can be transferred from the first shaft 2 to the third shaft 4 by the drive chain or belt 12. The third shaft 4 can be an output shaft, such as a differential shaft, which has a final drive 13.

The transmission also comprises a further transmission wheel 14 arranged on the second shaft 3 which transmission wheel 14 is connected to the transmission wheel 11 of the third shaft 4 through the drive chain or belt 12. A reverse gear of the transmission 1 is provided when the idling gear wheel 6 is rotationally locked to the first shaft 2, since torque can be transferred from the first shaft 2 to the second shaft 3 by the idling gear wheel 6 and the gear wheel 10 of the second shaft 3, and from the further transmission wheel 14 of the second shaft 3 to the drive chain or belt 12, and further to the transmission wheel 11 of the third shaft 4 having the final drive 13.

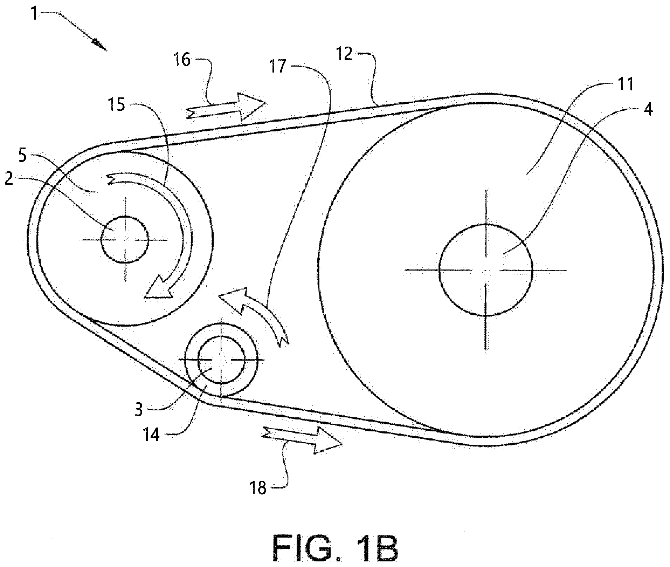

Fig. 1B shows a side view of the transmission 1 taken along the line 1B-1B in Fig. 1A.

For illustration purposes, Fig. 1A is a "stretched" view not showing the exact dimensions, particularly the distances between the shafts differ between Fig. 1A and Fig. 1B.

As shown in Fig. 1B, the idling transmission wheel 5 is engaged with the drive chain or belt 12. The first shaft 2 has a first rotation direction 15 and when the first shaft 2 drives the idling transmission wheel 5, the idling transmission wheel 5 drives the drive chain or belt 12 in a clockwise direction 16. The transmission wheel 11 of the third shaft 4 is engaged with the drive chain or belt 12. The transmission wheel 11 is driven by the drive chain or belt 12 when the drive chain or belt 12 is driven by the idling transmission wheel 5, and the third shaft 4 will rotate in the first rotation direction 15.

The further transmission wheel 14 of the second shaft 3 is engaged with the drive chain or belt 12. The second shaft 3 has a second rotation direction 17 opposite to the first rotation direction 15. When the second shaft 3 drives the further transmission wheel 14, the further transmission wheel 14 drives the drive chain or belt 12 in a counter-clockwise direction 18 and the third shaft 4 will rotate in the second rotation direction 17.

The further transmission wheel 14 of the second shaft 3 is suitably an idling transmission wheel journaled on the second shaft 3 which idling transmission wheel 14 is selectively rotationally lockable to the second shaft 3 for providing the reverse gear. When the forward gear is provided the further transmission wheel 14 will idling, and when the reverse gear is provided, the idling transmission wheel 5 will idling.

For an embodiment where a drive chain 12 is used, the idling transmission wheel 5 of the first shaft 2, the transmission wheel 11 of the third shaft and the further transmission wheel 14 of the second shaft are suitably sprocket wheels for engagement with the drive chain 12.

For an embodiment where a drive belt 12 is used, the idling transmission wheel 5 of the first shaft 2, the transmission wheel 11 of the third shaft and the further transmission wheel 14 of the second shaft are suitably pulleys for engagement with the drive belt 12.

With reference to Fig. 1A, a further forward gear of the transmission 1 can be provided through the idling gear wheel 6 of the first shaft 2 and the gear wheel 10 of the second shaft 3 when the idling gear wheel 6 is rotationally locked to the first shaft 2 and the further transmission wheel 14 of the second shaft 3 is idling. Then, the second shaft 3 drives another gear wheel 19 arranged on the second shaft 3 which gear wheel is engaged with a further gear wheel arranged on the third shaft 4, such as the final drive 13.

The gear wheel 19 engaged with the further gear wheel arranged on the third shaft 4 is suitably an idling gear wheel journaled on the second shaft 3 which idling gear wheel 19 is selectively rotationally lockable to the second shaft 3 for providing the further forward gear and optionally for providing other gears.

The coupling mechanism 9 may comprises a coupling sleeve 20 displaceable in an axial direction 21. By axial direction 21 is meant a direction in parallel with the longitudinal extension direction of the first shaft 2. The idling transmission wheel 5 and the idling gear wheel 6 are selectively rotationally lockable to the first shaft 2 by means of displacement of the coupling sleeve 20. For example, the idling transmission wheel 5 can be rotationally locked to the first shaft 2 by displacement of the sleeve 20 to the left, and the idling gear wheel 6 can be rotationally locked to the first shaft 2 by displacement of the sleeve 20 to the right.

The coupling mechanism 9 is preferably a synchronizer comprising the coupling sleeve 20, where the synchronizer is arranged to enable shifting between the forward gear, the reverse gear (the further forward gear) and a neutral position where none of the idling transmission wheel 5 and the idling gear wheel 6 is rotationally locked to the first shaft 2. In the neutral position, optionally, any other gear of one or more further gears of the transmission can be activated by means of further gear wheels arranged on the shafts.

The coupling mechanism 9 or a further coupling mechanism may comprise further sleeves for other transmission wheels or gear wheels, such as a sleeve for rotationally locking the further transmission wheel 14 of the second shaft 3 to the second shaft 3 and/or a sleeve for rotationally locking the gear wheel 19 of the second shaft 3 to the second shaft 3.

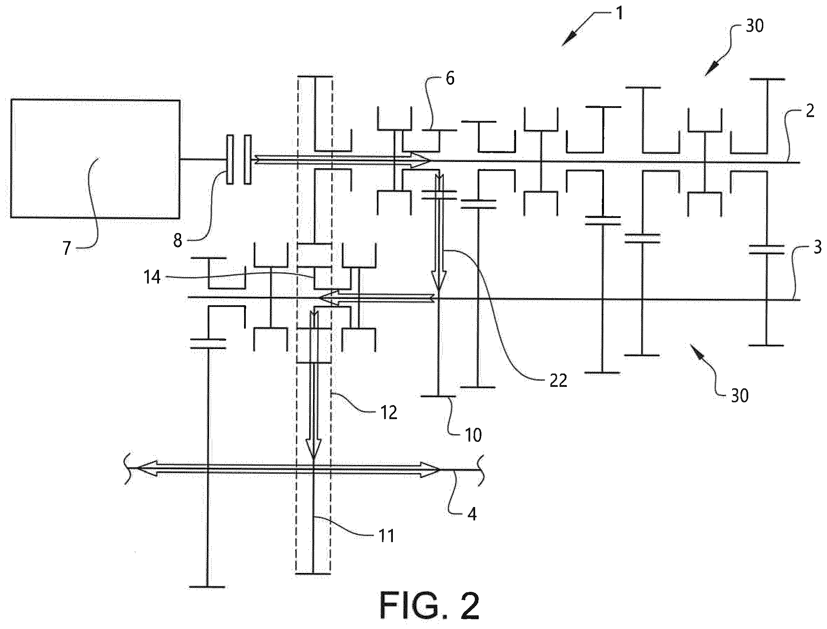

Fig. 2 shows how power is transferred when the reverse gear is activated. The power is provided by the drive unit 7 to the input shaft 2 via the clutch 8. As indicated with arrows 22 in Fig. 2, power is transferred from the input shaft 2 to the intermediate shaft 3 by the idling gear wheel 6 of the input shaft 2 and the gear wheel 10 of the intermediate shaft 3. Further, power is transferred from the intermediate shaft 3 to the output shaft 4 by means of the further transmission wheel 14 of the intermediate shaft 3 and the transmission wheel 11 of the output shaft 4, and the drive chain or belt 12 extending between the further transmission wheel 14 and the transmission wheel 11.

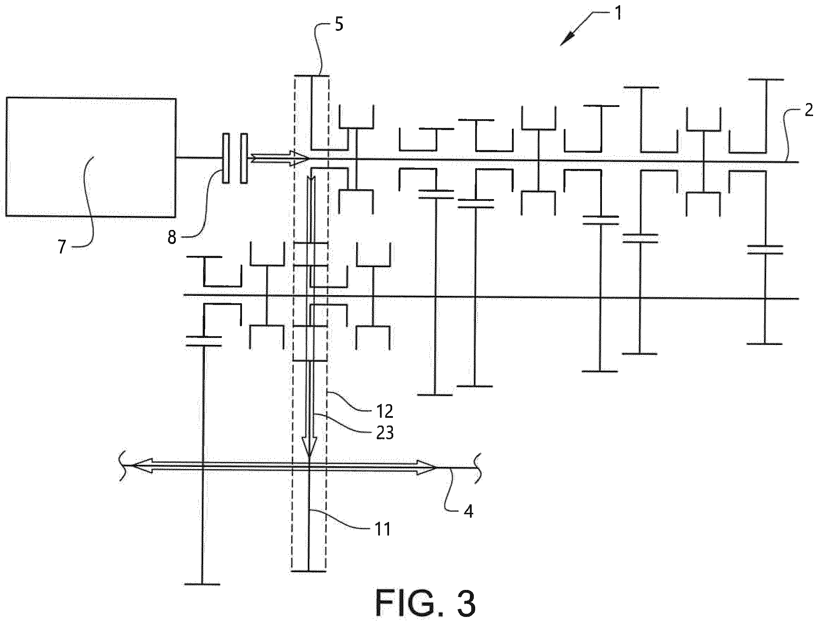

Fig. 3 shows how power is transferred when the forward gear is activated. The power is provided by the drive unit 7 to the input shaft 2 via the clutch 8. As indicated with arrows 23 in Fig. 3, power is transferred from the input shaft 2 to the output shaft 4 by means of the idling transmission wheel 5 of the input shaft 2 and the transmission wheel 11 of the output shaft 4, and the drive chain or belt 12 extending between the idling transmission wheel 5 and the transmission wheel 11. Thus, the power is transferred directly from the input shaft 2 to the output shaft 4 without any power transfer to the intermediate shaft 3.

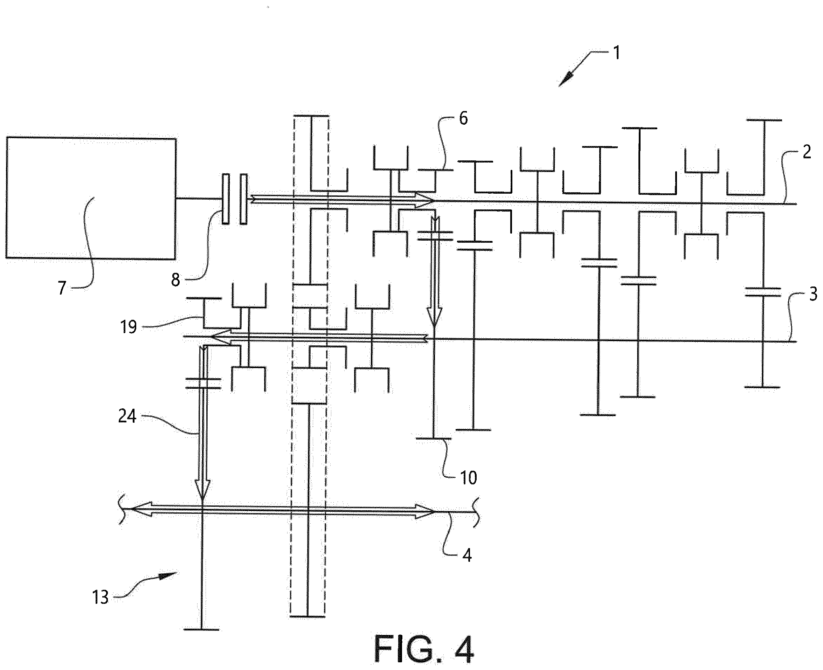

Fig. 4 shows how power is transferred when the further forward gear is activated. The power is provided by the drive unit 7 to the input shaft 2 via the clutch 8. As indicated with arrows 24 in Fig. 4, power is transferred from the input shaft 2 to the intermediate shaft 3 by the idling gear wheel 6 of the input shaft 2 and the gear wheel 10 of the intermediate shaft 3. Further, power is transferred from the intermediate shaft 3 to the output shaft 4 by means of said gear wheel 19 arranged on the intermediate shaft 3 which gear wheel 19 is engaged with a further gear wheel arranged on the output shaft 4, such as the final drive 13.

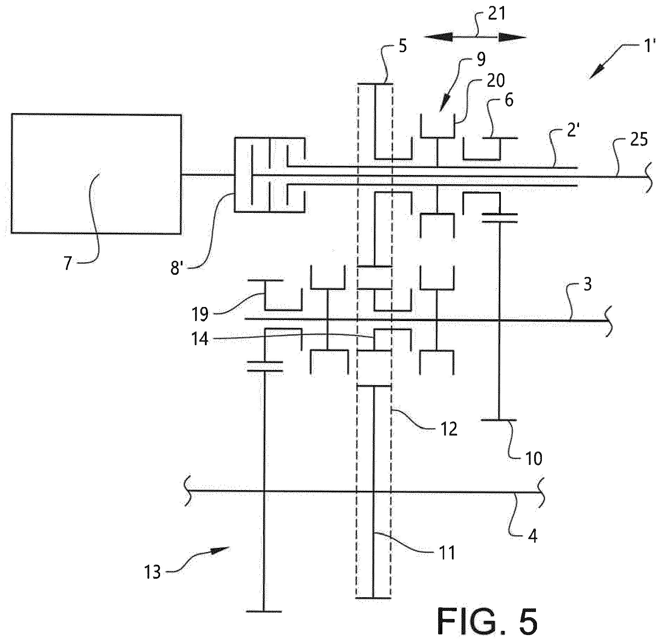

Fig. 5 is a schematic view of a further example embodiment of the transmission. The clutch 8' is a so-called dual clutch used for achieving a dual clutch transmission (DCT). The transmission 1' comprises an inner input shaft 25 and an outer input shaft 2'. The inner input shaft 25 and the outer input shaft 2' are selectively connectable to the drive unit 7 via the clutch 8'. The inner input shaft 25 and the outer input shaft 2' are arranged concentrically relative to each other. The first shaft provided with the idling transmission wheel 5 and the idling gear wheel 6 is the outer input shaft 2'. As it regards remaining components of Fig. 5 reference is made to Figs. 1A and 1B and the corresponding text describing Figs. 1A and 1B herein.

For all example embodiments shown herein, in addition to the forward gear and the reverse gear, the transmission may include one or more further gears and gear ratios. See for example Fig. 2. The transmission 1 suitably provides a plurality of forward gears with different gear ratios between the input shaft 2 and the output shaft 4. The forward gear provided by the drive chain or belt 12 has preferably the lowest gear ratio of the forward gears of the transmission 1, providing the highest speed of the output shaft, and often the gear ratio of the forward gear provided by the drive chain or belt 12 is closest to 1:1 of the forward gears of the transmission. At least one of said plurality of forward gears is achieved by torque transfer between gear wheels 30 engaged with each other, and optionally all forward gears except for the forward gear achieved by the drive chain or belt 12 are provided by engaged gearwheels.

For example, the ratio of the speed of the input shaft and the speed of the output shaft can be in order of 2:1 for the forward gear provided by the drive chain or belt, and the ratio of the speed of the input shaft and the output shaft can be in the order of 15:1 (5:1 between first shaft and second shaft, and 3:1 between second shaft and third shaft, for instance) for the first gear of the transmission and/or the reverse gear of the transmission.

It is to be understood that the present invention is not limited to the embodiments described above and illustrated in the drawings; rather, the skilled person will recognize that many changes and modifications may be made within the scope of the appended claims.

## Claims

1. A transmission (1) for a vehicle, the transmission comprising a first shaft (2), a second shaft (3) and a third shaft (4), an idling transmission wheel (5) journaled on the first shaft (2) and an idling gear wheel (6) journaled on the first shaft (2), and a coupling mechanism (9), the idling transmission wheel (5) and the idling gear wheel (6) being selectively rotationally lockable to the first shaft (2) by means of the coupling mechanism (9), the transmission (1) further comprising a gear wheel (10) arranged on the second shaft (3) which gearwheel is engaged with the idling gear wheel (6) of the first shaft (2), a transmission wheel (11) arranged on the third shaft (4), and a drive chain or belt (12), **characterized in that** the idling transmission wheel (5) and the transmission wheel (11) of the third shaft are connected to each other through the drive chain or belt (12), thereby providing a forward gear of the transmission when the idling transmission wheel (5) is rotationally locked to the first shaft (2), and the transmission further comprises a further transmission wheel (14) arranged on the second shaft (3) which transmission wheel is connected to the transmission wheel (11) of the third shaft (4) through the drive chain or belt (12), thereby providing a reverse gear of the transmission when the idling gear wheel (6) is rotationally locked to the first shaft (2).

2. A transmission according to claim 1, **characterized in that** the further transmission wheel (14) of the second shaft (3) is an idling transmission wheel journaled on the second shaft which idling transmission wheel is selectively rotationally lockable to the second shaft for providing the reverse gear.

3. A transmission according to claim 1 and 2, **characterized in that** a further forward gear of the transmission is provided through the idling gear wheel (6) of the first shaft (2) and the gear wheel (10) of the second shaft (3) when the idling gear wheel (6) is rotationally locked to the first shaft (2) and the further transmission wheel (14) of the second shaft (3) is idling.

4. A transmission according to any of claims 1-3, **characterized in that** the coupling mechanism (9) comprises a coupling sleeve (20) displaceable in an axial direction (21), the idling transmission wheel (5) and the idling gear wheel (6) being selectively rotationally lockable to the first shaft (2) by means of displacement of the coupling sleeve (20).

5. A transmission according to claim 4, **characterized in that** the coupling mechanism (9) is a synchronizer comprising the coupling sleeve (20), the synchronizer being arranged to enable shifting between the forward gear, the reverse gear and a neutral position where none of the idling transmission wheel (5) and the idling gear wheel (6) is rotationally locked to the first shaft (2).

6. A transmission according to any preceding claim, **characterized in that** the first shaft (2) is an input shaft of the transmission (1).

7. A transmission according to any preceding claim, **characterized in that** the third shaft (4) is an output shaft of the transmission (1), preferably a differential shaft of the transmission (1).

8. A transmission according to claim 6 and 7, **characterized in that** the transmission provides a plurality of forward gears with different gear ratios between the input shaft (2) and the output shaft (4), and the forward gear provided by the drive chain or belt (12) has the lowest gear ratio of the forward gears of the transmission (1) providing the highest speed of the output shaft.

9. A transmission according to claim 6 and 7, **characterized in that** the transmission provides a plurality of forward gears with different gear ratios between the input shaft (2) and the output shaft (4), and the forward gear provided by the drive chain or belt (12) has the gear ratio closest to 1:1 of the forward gears of the transmission (1).

10. A transmission according to claim 8 or 9, **characterized in that** at least one of said plurality of forward gears is achieved by torque transfer between gear wheels (30) engaged with each other.

11. A transmission according to any preceding claim, **characterized in that** the drive chain or belt (12) is a tooth chain or a toothed belt.

12. A transmission according to any preceding claim, **characterized in that** the transmission (1) is a manual transmission.

13. A transmission according to any of claims 1-11, **characterized in that** the transmission (1) is an automatic transmission.

14. A transmission according to claim 13, **characterized in that** the transmission (1) is a dual clutch transmission (DCT).

15. A transmission according to claim 14, **characterized in that** the transmission (1) comprises an inner input shaft (25) and an outer input shaft (2'), the inner input shaft and the outer input shaft being arranged concentrically relative to each other, the first shaft being the outer input shaft (2').
